# EUROPÄISCHE PATENTANMELDUNG

(11) **EP 2 848 969 A1**
(43) Veröffentlichungstag der Anmeldung: **18.03.2015**
(21) Anmeldenummer: 13184357.5
(22) Anmeldetag: 13.09.2013
(51) Int. Cl.: G02B 6/00, F21V 8/00

(54) **Aufnahmesystem für einen Lichtleiter**

(71) Anmelder: DMG MORI SEIKI AKTIENGESELLSCHAFT, 33689 Bielefeld (DE); DMG MORI SEIKI CO., LTD., Yamatokoriyama-shi, Nara 639-1160 (JP)
(72) Erfinder: Seitz, Reinhold, 87659 Hopferau (DE); Schindler, Dominic, 6923 Lauterach (AT)
(74) Vertreter: MERH-IP Matias Erny Reichl Hoffmann

(57) **Zusammenfassung**

Ein Aufnahmesystem (100) für einen Lichtleiter (12) weist einen ersten Profilkörper (101) und einen zweiten Profilkörper (102) auf. Der erste Profilkörper( 101) umfasst wenigsten zwei Abschnitte (2 und 3), die durch elastische Verbiegung eines Teilbereichs (4) des ersten Profilkörpers (101) entlang einer in dem ersten Profilkörper verlaufenden Achse (A) relativ zueinander verbiegbar sind; eine Vertiefungsstruktur mit einer entlang der Achse verlaufenden ersten Vertiefung (5) zur Aufnahme eines Lichtleiters (12); und Halteelementen (6a und 6b), die entlang der Achse vorgesehen sind und an die erste Vertiefung angrenzen. Die Halteelemente sind so angeordnet, dass sich bei Verbiegen des ersten Profilkörpers entlang der Achse Abschnitte der Halteelemente auf den Lichtleiter zubewegen und dabei den Lichtleiter in der ersten Vertiefung einklemmen. Die Verbiegung des ersten Profilkörpers wird druch dessen Einsatz in den zweiten Profilkörper erreicht.

## Beschreibung

Die Erfindung betrifft ein Aufnahmesystem für einen Lichtleiter, sowie ferner einen oder mehrere Profilkörper für ein derartiges Aufnahmesystem für einen Lichtleiter.

Lichtleiter können zu unterschiedlichsten Zwecken eingesetzt werden. So können Lichtleiter dazu dienen, Information in Form von Lichtsignalen zu transportieren. Des Weiteren können Lichtleiter zur Beleuchtung eingesetzt werden. In diesem Fall sind die Lichtleiter so ausgestaltet, dass wenigstens ein Teil des durch den Lichtleiter transportierten Lichts über die Außenfläche des Lichtleiters nach außen abgegeben wird.

Wird der Lichtleiter zur Beleuchtung eingesetzt, wird dieser üblicherweise an einem Körper befestigt. Hierfür kann beispielsweise eine Aufnahmesystem zum Einsatz kommen, die den Lichtleiter fixiert, und die ihrerseits an dem Körper befestigt ist.

Die der Erfindung zugrunde liegende Aufgabe ist, ein Aufnahmesystem für einen Lichtleiter anzugeben, das kostengünstig herstellbar ist, und das es ermöglicht, einen Lichtleiter auf einfache Art und Weise an einem Körper zu befestigen.

Zur Lösung der Aufgabe stellt die Erfindung ein Aufnahmesystem für einen Lichtleiter gemäß Patentanspruch 1 bereit. Des Weiteren stellt die Erfindung Profilkörper gemäß den Ansprüchen 14 und 15 bereit, zum Einsatz in einem Aufnahmesystem gemäß Anspruch 1. Vorteilhafte Ausgestaltungen beziehungsweise Weiterbildungen des Erfindungsgedankens finden sich in den Unteransprüchen.

Nach einem ersten Aspekt der Erfindung wird erfindungsgemäß ein Aufnahmesystem für einen Lichtleiter vorgeschlagen. Das Aufnahmesystem umfasst einen ersten Profilkörper, der dazu ausgebildet ist, den Lichtleiter entlang einer Längsrichtung des ersten Profilkörpers aufzunehmen, und einen zweiten Profilkörper, der dazu ausgebildet ist, den ersten Profilkörper entlang der Längsrichtung des ersten Profilkörpers aufzunehmen.

Der erste Profilkörper (Aufnahmeprofilkörper) weist einen sich entlang einer Achse erstreckenden Biegeabschnitt auf, wobei die Achse in der Längsrichtung des ersten Profilkörpers verläuft. Weiterhin weist der erste Profilkörper auf gegenüberliegenden Seiten des Biegeabschnitts zwei steife Abschnitte auf, die mittels elastischen Verbiegens des Biegeabschnitts relativ zueinander um die Achse verschwenkbar sind. Auf den steifen Abschnitten des ersten Profilkörpers sind Halteelemente entlang der Achse auf den steifen Abschnitten angeordnet, wobei ein sich in der Richtung der Achse erstreckender erster Aufnahmeabschnitt zwischen den Halteelementen (der steifen Abschnitte zum Aufnehmen des Lichtleiters ausgebildet wird.

Der zweite Profilkörper (Halterungsprofilkörper) weist einen zweiten Aufnahmeabschnitt zum Aufnehmen des ersten Profilkörpers auf und ist dazu ausgebildet, mit dem ersten Profilkörper in Eingriff gebracht zu werden, wobei der erste Profilkörper dazu ausgebildet ist, in einem vorzugsweise bei einem vorbestimmten Winkel gebogenen Zustand mit dem zweiten Profilkörper in Eingriff gebracht zu werden, wobei die Halteelemente derart angeordnet sind, dass der in dem ersten Aufnahmeabschnitt aufgenommene Lichtleiter zwischen den Halteelementen der steifen Abschnitte eingeklemmt ist, wenn der erste Profilkörper in dem gebogenen Zustand mit dem zweiten Profilkörper in Eingriff gebracht ist.

Ein derartiges System erlaubt es vorteilhaft auf sehr einfache Art und Weise den Lichtleiter aufzunehmen und zu befestigen, indem ein gegebenenfalls an einer vorbestimmten Position vorinstallierter Halterungsprofilkörper bereitgestellt wird, und nach Einlegen des Lichtleiters in den zwischen den Halteelementen geformten Aufnahmeabschnitt des Aufnahmeprofilkörpers, der Aufnahmeprofilkörper nur noch in den vorinstallierten Halterungsprofilkörper eingesetzt werden muss, um bei Eingriff (z.B. durch einfache Verrastung der Profilkörper bzw. Klemmung der Profilkörper) mit dem Aufnahmeabschnitt des Halterungsprofilkörpers in den gebogenen Zustand gebracht zu werden, in dem der Lichtleiter im gleichen Arbeitsschritt auf einfache Weise eingeklemmt wird und somit fixiert werden kann.

Gemäß einer Ausführungsform der Erfindung wird beispielsweise ein Aufnahmesystem für einen Lichtleiter bereitgestellt, das einen Aufnahmeprofilkörper (erster Profilkörper) umfasst. Der Aufnahmeprofilkörper weist wenigsten zwei steife Abschnitte auf, die durch elastische Verbiegung eines Teilbereichs (Biegeabschnitt) des Aufnahmeprofilkörpers entlang einer in Längsrichtung des Aufnahmeprofilkörpers verlaufenden Achse relativ zueinander verschwenkbar (z.B. klappbar bzw. faltbar) sind. Weiterhin weist der Aufnahmeprofilkörper eine Vertiefungsstruktur mit einer entlang der Achse verlaufenden ersten Vertiefung zur Aufnahme eines Lichtleiters auf. Entlang der Achse sind ferner Halteelemente vorgesehen, die an die erste Vertiefung angrenzen.

Die Halteelemente sind so angeordnet, dass sich bei Verbiegen des Aufnahmeprofilkörpers entlang der Achse Abschnitte der Halteelemente auf den Lichtleiter zubewegen und dabei den Lichtleiter in der ersten Vertiefung einklemmen. Ein weiterer Bestandteil des Aufnahmesystems wird beispielsweise mit einem Halterungsprofilköper (zweiter Profilkörper) bereitgestellt, in den der Aufnahmeprofilkörper zur Fixierung des Lichtleiters eingesetzt und in Eingriff gebracht werden kann, wodurch durch elastisches Verbiegen des Aufnahmeprofilkörper der Lichtleiter geklemmt wird, und der Aufnahmeprofilkörper dann in dem den Lichtleiter klemmend fixierenden Zustand in dem Halterungsprofilköper gehalten zu werden.

Ein Vorteil eines derartigen Aufnahmesystems ist, dass das Fixieren des Lichtleiters in der sehr einfach ist. So muss lediglich der Aufnahmeprofilkörper innerhalb des Teilbereichs, der entlang der Achse verläuft (erste Vertiefung bzw. erster Vertiefungsabschnitt), verbogen werden, derart, dass sich die Halteelemente auf den in der ersten Vertiefung befindlichen Lichtleiter zubewegen. Somit kann die Montage des Lichtleiters ohne spezielles Werkzeug und in einem einfachen Arbeitsschritt durch Einsetzen des Aufnahmeprofilkörper in den gegebenenfalls vorinstallierten Halterungsprofilkörper erfolgen.

Der Aufnahmeprofilkörper kann beispielsweise als ein im Wesentlichen flächenförmiger Aufnahmeprofilkörper ausgestaltet sein, in dem eine drei-dimensionale Vertiefungsstruktur ausgebildet ist. Vorteil hierbei ist, dass der Aufnahmeprofilkörper einfach herstellbar ist. Ist der Aufnahmeprofilkörper zudem einstückig ausgestaltet, beispielsweise als einstückiges Formteil, so kann die Herstellung des Aufnahmeprofilkörpers weiter vereinfacht werden. Der Aufnahmeprofilkörper kann aus einem beliebig geeigneten Material hergestellt werden, beispielsweise aus Kunststoff. Zumindest der Biegeabschnitt sollte jedoch elastisch biegbar ausgestaltet sein.

Elastisches Biegen des Biegeabschnitts bedeutet hierbei im Sinne der Erfindung, dass die zumindest in kleineren Winkeln zueinander gebogenen steifen Abschnitte auf beiden Seiten des Biegeabschnitts ohne Einwirkung äußerer Kräfte im Wesentlichen in eine Grundstellung zurückkehrt, in der der Lichtleiter nicht zwischen den Halteelementen geklemmt ist und aus dem Aufnahmeprofilkörper entnommen werden kann. Dies bedeutet nicht, dass ein Verbiegen der steifen Abschnitte zueinander in größeren Winkeln auch zumindest teilweise zu inelastischen Verformungen des Aufnahmeprofils führen kann, bei denen die steifen Abschnitte nach Verbiegen nicht exakt zu einer Grundstellung zurückkehren, die der Aufnahmeprofilkörper vor dem Verbiegen ohne äußere Kräfte eingenommen hatte.

Vorzugsweise weist der erste Profilkörper eine Vertiefungsstruktur auf, die einen sich entlang der Achse erstreckenden ersten Vertiefungsabschnitt aufweist, und der erste Vertiefungsabschnitt den ersten Aufnahmeabschnitt ausbildet, wobei die Halteelemente Erhebungen ausformen, die seitlich entlang des ersten Vertiefungsabschnitts angeordnet sind. Vorzugsweise weist die Vertiefungsstruktur weiterhin zweite Vertiefungsabschnitte auf, die seitlich entlang des ersten Vertiefungsabschnitts angeordnet sind, wobei die zweiten Vertiefungsabschnitte in den ersten Vertiefungsabschnitt münden.

Vorzugsweise umfassen die zweiten Vertiefungsabschnitte eine erste Gruppe von zweiten Vertiefungsabschnitten, die entlang der Achse auf einer der steifen Abschnitte angeordnet sind, und eine zweite Gruppe von zweiten Vertiefungsabschnitten, die entlang der Achse auf dem anderen der steifen Abschnitte angeordnet sind, wobei jede der zweiten Vertiefungsabschnitte der ersten Gruppe einem auf der gegenüberliegenden Seite der Achse angeordneten zweiten Vertiefungsabschnitt der zweiten Gruppe gegenüberliegend angeordnet ist.

Vorzugsweise trennt jedes Halteelement zwei in Richtung der Achse benachbart angeordnete zweite Vertiefungsabschnitte voneinander.

Wird das Aufnahmesystem als Beleuchtungsvorrichtung eingesetzt, so ist der Lichtleiter vorteilhafterweise so ausgestaltet, dass dieser gleichmäßig über seine gesamte Oberfläche Licht abstrahlt, womit eine gleichförmige Beleuchtung über die gesamte Aufnahmesystem hinweg ermöglicht wird.

Wird das Aufnahmesystem als Teil einer Beleuchtungsvorrichtung eingesetzt, so kann eine dem Lichtleiter zugewandte Oberfläche des Aufnahmeprofilkörpers vorzugsweise mit einem reflektierenden Material beschichtet sein. Damit wird aus dem Lichtleiter austretendes Licht nicht vom Aufnahmeprofilkörper absorbiert, sondern von diesem reflektiert (bevorzugt diffus) und damit vollständig an die Umgebung abgegeben. Somit kann der Aufnahmeprofilkörper vorteilhaft zugleich als Befestigungsmittel des Lichtleiters verwendet werden als auch als Reflektionsfläche zur verbesserten Abstrahlung des Lichts des Lichtleiters, wobei keine weiteren Befestigungsmittel benötigt werden, die den Lichtleiter gegebenenfalls an vereinzelten Halterungspositionen vollumfänglich umschließen würden und die Lichtabstrahlung des Lichtleiters reduzieren könnten.

Vorteilhaft ermöglicht es die Erfindung bei derartigen Ausführungen, den Lichtleiter entlang seiner gesamten Länge auf einer Vorderseite unverdeckt zu belassen, da dieser im Wesentlich nur seitlich von Halteelementen geklemmt wird, und außerdem auch seitlich und auf einer Rückseite (d.h. dem Profil zugewandt) abgestrahltes Licht durch Reflektion auf der Oberfläche des Profils für die Beleuchtungsvorrichtung nutzbar zu machen.

Der Aufnahmeprofilkörper kann beispielsweise so ausgestaltet sein, dass dieser überall im Wesentlichen die gleiche Dicke aufweist. Ein derartiger Aufnahmeprofilkörper lässt sich besonders einfach herstellen, beispielsweise mittels eines Formverfahrens, z.B. aus einer Kunststoffplatte konstanter Dicke.

Vorzugsweise umfassen die Halteelemente eine erste Gruppe von Halteelementen, die entlang der Achse auf einer der steifen Abschnitte angeordnet sind, und eine zweite Gruppe von Halteelementen, die entlang der Achse auf dem anderen der steifen Abschnitte angeordnet sind, wobei vorzugsweise jedes der Halteelemente der ersten Gruppe einem entsprechenden, auf der gegenüberliegenden Seite der Achse angeordneten Halteelement der zweiten Gruppe zugewandt ist.

Die Halteelemente können folglich zu Halteelement-Paaren gruppiert sein, wobei die Halteelemente eines Halteelement-Paars bezüglich der Achse einander gegenüberliegen. Auf diese Art und Weise ist eine besonders zuverlässige Fixierung des Lichtleiters in der ersten Vertiefung möglich, ohne dass eine Verbiegung des Lichtleiters befürchtet werden müsste. Ist die Gefahr einer Verbiegung des Lichtleiters gering, so können alternativ die Halteelemente eines Halteelement-Paars bezüglich der Achsrichtung auch gegeneinander versetzt angeordnet werden.

Vorzugsweise sind die Halteelemente derart geformt, dass sie sich in einer Richtung quer, insbesondere senkrecht, zur Richtung der Achse erstrecken, zum Erhöhen eine Steifigkeit der steifen Abschnitte, derart, dass das elastische Verbiegen im Wesentlichen nur im Bereich des Biegeabschnitts auftritt.

Die Halteelemente können beispielsweise stegförmige Elemente sein. Die stegförmigen Elemente können so ausgestaltet sein, dass eine Steifigkeit des Aufnahmeprofilkörpers im Bereich der stegförmigen Elemente erhöht ist, derart, dass die Verbiegung des Aufnahmeprofilkörpers entlang der Achse lediglich im Bereich der ersten Vertiefung erfolgen kann. Das heißt, durch die Geometrie der stegförmigen Elemente wird bewirkt, dass sich der Aufnahmeprofilkörper "automatisch" lediglich entlang der Achse verbiegen lässt, nicht jedoch (oder zumindest zu einem geringen Anteil) in einem anderen Teilbereich des Aufnahmeprofilkörpers. Damit ist sichergestellt, dass der Aufnahmeprofilkörper versehentlich nicht anderweitig verbogen wird.

Die Längsausrichtung der Halteelemente (z.B. der stegförmigen Elemente) kann beispielsweise senkrecht zur Achsrichtung verlaufen. Alternativ könnten die Längsrichtungen der Halteelemente jedoch auch einen Winkel von < 90° beziehungsweise > 90° bilden bezüglich der Achsrichtung bilden ("Fischgrätenmuster").

Um eine möglichst effektive Fixierung des Lichtleiters in der ersten Vertiefung zu gewährleisten, können zumindest Teile der ersten Vertiefung zugewandter Enden der Halteelemente (z.B. der stegförmigen Elemente) eine kreissegmentförmige Gestalt aufweisen. Die kreissegmentförmige Gestalt ist in besonderem Maße dazu geeignet, einen Lichtleiter mit kreisförmigem Querschnitt formschlüssig und damit zuverlässig einzuklemmen. Vorteilhafterweise sollte gewährleistet sein, dass die Halteelemente einen unteren Teil eines Bereichs der Außenseite des Lichtleiters umklammern, der oberhalb einer horizontalen Schnittebene durch den Lichtleiter liegt, die die Längsachse des Lichthalters beinhaltet.

Damit kann sichergestellt werden, dass der Lichtleiter sich nicht aus der Aufnahmevertiefung lösen kann. Da andererseits keine vollständige Umklammerung des Lichtleiters erfolgt, sondern ein oberer Bereich der Oberfläche des Lichtleiters nicht umklammert ist (d.h. frei liegt), kann der Aufnahmeprofilkörper auf einfache Art und Weise hergestellt werden (eine vollständige Umklammerung des Lichtleiters würde erforderlich machen, die der ersten Vertiefung zugewandten Enden der stegförmigen Elemente mit langen kreissegmentförmigen Abschnitt zu versehen, was ein Herstellen des Aufnahmeprofilkörpers mittels eines Formprozesses erschweren würde).

Die Vertiefungsstruktur kann zweite Vertiefungen aufweisen, die seitlich der ersten Vertiefung entlang der Achse vorgesehen sind und in die erste Vertiefung münden. Die zweiten Vertiefungen bewirken, dass sich aus dem Lichtleiter austretendes Licht besser seitlich ausbreiten kann, womit die Beleuchtungseigenschaften des Lichtleiters verbessert werden, wenn der Lichtleiter zur Beleuchtung eingesetzt wird. Das in die zweiten Vertiefungen eintretende Licht kann schließlich von dem Profil der zweiten Vertiefungen nach oben reflektiert werden.

Die zweiten Vertiefungen und die Halteelemente können so ausgestaltet sein, dass ein Halteelement jeweils zwei benachbarte zweite Vertiefungen in Achsrichtung voneinander trennt. Damit ist einerseits gewährleistet, dass die Verbiegung des Aufnahmeprofilkörpers entlang der Achse lediglich im Bereich der ersten Vertiefung erfolgen kann (bewirkt durch die erhöhte Steifigkeit der Halteelemente), andererseits sind die Ausmaße der zweiten Vertiefungen in Achsrichtung maximal ausgedehnt, was eine optimale seitliche Ausbreitung des Lichts aus dem Wellenleiter heraus ermöglicht. Die zweiten Vertiefungen können zu Vertiefungs-Paaren gruppiert sein, wobei die zweiten Vertiefungen eines Vertiefungs-Paars bezüglich der Achse einander gegenüberliegen.

Die zweiten Vertiefungen können in einem von der Achse abgewandten Bereich jeweils ein stufenförmiges Bodenprofil aufweisen. Das stufenförmige Bodenprofil kann dazu dienen, aus dem Lichtleiter seitlich austretendes Licht nach oben zu reflektieren und damit die Beleuchtungseigenschaften zu verbessern.

Weiterhin können die stufenförmigen Bodenprofile der zweiten Vertiefungsabschnitte dazu ausgebildet ein, mit jeweiligen Eingriffsabschnitten des zweiten Aufnahmeabschnitts des zweiten Profilkörpers in Eingriff gebracht zu werden.

Die Aufnahmesystem weist vorteilhafterweise eine Halterungsprofilkörper auf, in der der Aufnahmeprofilkörper verrastbar ist, indem dieser entlang der Achse verbogen wird, wobei die Halterungsprofilkörper so ausgestaltet ist, dass die Verrastung erfolgt, nachdem die Halteelemente den Lichtleiter eingeklemmt haben. Dies stellt sicher, dass der Lichtleiter auch tatsächlich in der ersten Vertiefung fixiert ist, bevor die Verrastung erfolgt, womit ein unbeabsichtigtes Lösen des Lichtleiters aus dem Aufnahmeprofilkörper währen und nach der Montage ausgeschlossen ist.

Weist der Aufnahmeprofilkörper zweite Vertiefungen mit stufenförmigem Bodenprofil auf, so kann das stufenförmige Bodenprofil alternativ oder zusätzlich dazu dienen, den Aufnahmeprofilkörper in der Halterungsprofilkörper zu verrasten. Somit können gleichermaßen positive Beleuchtungseffekte und einfaches Fixieren des Aufnahmeprofilkörpers in der Halterungsprofilkörper mittels einer einzigen mechanischen Struktur (stufenförmigem Bodenprofil) bewirkt werden.

Die Halterungsprofilkörper kann beispielsweise als U-förmiges Element ausgestaltet sein, wobei die Enden des U-förmigen Elements mit der Unterseite des Aufnahmeprofilkörpers verrasten, wenn der Aufnahmeprofilkörper in das U-förmige Element hineingedrückt und damit entlang der Achse verbogen wird. Weist der Aufnahmeprofilkörper zweite Vertiefungen mit stufenförmigen Bodenprofil auf, so können beispielsweise die Enden des U-förmigen Elements mit den stufenförmigen Bodenprofilen der zweiten Vertiefungen verrasten, wenn der Aufnahmeprofilkörper in das U-förmige Element hineingedrückt und damit entlang der Achse verbogen wird.

Hierbei kann der zweite Aufnahmeabschnitt des zweiten Profilkörpers (Halterungsprofilkörper) vorzugsweise im Querschnitt im Wesentlichen U-förmig ausgebildet sein, wobei vorzugsweise jeweilige Endabschnitte des U-förmig ausgebildeten zweiten Aufnahmeabschnitts Eingriffsabschnitte des zweiten Aufnahmeabschnitts des zweiten Profilkörpers ausbilden, wobei der erste Profilkörper (Aufnahmeprofilkörper) dazu ausgebildet ist, mit den Eingriffsabschnitten des zweiten Aufnahmeabschnitts des zweiten Profilkörpers zu verrasten. Vorzugsweise nimmt der erste Profilkörper hierbei im mit den Eingriffsabschnitten verrasteten Zustand den gebogenen Zustand ein und klemmt den Lichtleiter zwischen den Halteelementen.

Um ein einfaches Befestigen des Halterungsprofilkörpers an einem weiteren Körper zu ermöglichen, kann das Aufnahmesystem weiterhin mit einer Befestigungseinrichtung versehen werden. Die Befestigungseinrichtung fungiert hierbei als "Bindeglied", d.h. der Halterungsprofilkörper ist mittels der Befestigungseinrichtung an dem weiteren Körper befestigbar.

Die Befestigungseinrichtung weist vorzugsweise zwei parallel zueinander verlaufende Schienen auf, wobei jede von einander zugewandter Seiten zumindest teilweise mit einer gerillten Oberfläche versehen sind. Zwischen den Schienen ist ein Zwischenraum vorgesehen. Der Halterungsprofilkörper und die Befestigungseinrichtung sind so gegeneinander ausrichtbar, dass die Halterungsprofilkörper einander gegenüberliegende Enden der Schienen sowie einen Zwischenraum zwischen den beiden Enden bedeckt.

Indem der Teil des Halterungsprofilkörpers, der die einander gegenüberliegenden Enden der Schienen sowie den Zwischenraum zwischen den beiden Enden bedeckt, mit einer Schraube durchbohrt wird, derart, dass das Gewinde der Schraube zwischen den gerillten Oberflächen zu liegen kommt und in die Rillen der gerillten Oberflächen eingreift, kann der Halterungsprofilkörper an der Befestigungseinrichtung befestigt werden, da auf diese Weise der Halterungsprofilkörper auf die beiden Enden der Schienen gedrückt wird. Die Befestigungseinrichtung ist ihrerseits mit dem Körper befestigt. Ein Vorteil dieser Ausführungsform ist, dass die Position der Schraube bzw. die Positionen mehrerer Schrauben bezüglich einer Längsrichtung der Schienen frei wählbar ist/sind, was einen Prozess der Befestigung der Halterungsprofilkörper an der Befestigungseinrichtung erleichtert.

Vorzugsweise weist der erste Profilkörper (Aufnahmeprofilkörper) ein Kunststoffprofil auf und der zweite Profilkörper (Halterungsprofilkörper) ein Metallprofil.

Gemäß einem weiteren Aspekt der Erfindung wird ein erster Profilkörper (Aufnahmeprofilkörper) zum Einsatz in einem Aufnahmesystem für einen Lichtleiter vorgeschlagen, der dazu ausgebildet ist, den Lichtleiter entlang der Längsrichtung aufzunehmen, wobei der erste Profilkörper aufweist: einen sich entlang einer Achse erstreckenden Biegeabschnitt, wobei die Achse in der Längsrichtung des ersten Profilkörpers verläuft; zwei steife Abschnitte die auf gegenüberliegenden Seiten des Biegeabschnitts angeordnet sind, wobei die steifen Abschnitte mittels elastischem Verbiegen des Biegeabschnitts relativ zueinander um die Achse verschwenkbar sind; und Halteelemente die entlang der Achse auf den steifen Abschnitten angeordnet sind, wobei ein sich in der Richtung der Achse erstreckender erster Aufnahmeabschnitt zwischen den Halteelementen der steifen Abschnitte zum Aufnehmen des Lichtleiters ausgebildet ist. Die Halteelemente sind derart angeordnet, dass der in dem ersten Aufnahmeabschnitt aufgenommene Lichtleiter zwischen den Halteelementen der steifen Abschnitte einklemmbar ist, indem der erste Profilkörper mittels elastischen Verbiegens des Biegeabschnitts in den gebogenen Zustand gebracht wird.

Gemäß einem weiteren Aspekt der Erfindung wird ein zweiter Profilkörper (Halterungsprofilkörper) zum Einsatz in einem Aufnahmesystem für einen Lichtleiter vorgeschlagen, wobei der zweite Profilkörper dazu ausgebildet ist, einen ersten Profilkörper, der einen Lichtleiter aufnimmt, entlang der Längsrichtung aufzunehmen, wenn der erste Profilkörper aufweist: einen sich entlang einer Achse erstreckenden Biegeabschnitt, wobei die Achse in der Längsrichtung verläuft, zwei steife Abschnitte, die auf gegenüberliegenden Seiten des Biegeabschnitts angeordnet sind, wobei die steifen Abschnitte mittels elastischem Verbiegen des Biegeabschnitts relativ zueinander um die Achse verschwenkbar sind; und Halteelemente, die entlang der Achse auf den steifen Abschnitten angeordnet sind. Der zweite Profilkörper weist einen zweiten Aufnahmeabschnitt zum Aufnehmen des ersten Profilkörpers auf und ist dazu ausgebildet, mit dem ersten Profilkörper in Eingriff gebracht zu werden, derart, dass der erste Profilkörper in einem gebogenen Zustand mit dem zweiten Profilkörper in Eingriff gebracht wird.

Die Erfindung wird im Folgenden unter Bezugnahme auf die Figuren in beispielsweiser Ausführungsform näher erläutert.

Es zeigen:
- Fig. 1A: eine perspektivische Teilansicht eines Endbereichs eines Aufnahmesystems für einen Lichtleiter mit einem Abdeckungselement gemäß einer bevorzugten Ausführung der Erfindung,
- Fig. 1B: eine Draufsicht auf einen mittleren Teilbereich des Aufnahmesystems ohne Abdeckungselement für einen Lichtleiter gemäß einer bevorzugten Ausführung der Erfindung,
- Fig. 1C: eine perspektivische Teilansicht des mittleren Teilbereichs des Aufnahmesystems ohne Abdeckungselement für einen Lichtleiter gemäß einer bevorzugten Ausführung der Erfindung,
- Fig. 1D: eine perspektivische Teilansicht eines Endbereichs des Aufnahmesystems ohne Abdeckungselement für einen Lichtleiter gemäß einer bevorzugten Ausführung der Erfindung,
- Fig. 2A: eine perspektivische Teilansicht auf eine Oberseite eines einen Lichtleiter aufnehmenden Aufnahmeprofilkörpers eines Aufnahmesystems gemäß einer Ausführungsform der Erfindung,
- Fig. 2B: eine perspektivische Teilansicht auf eine Unterseite eines einen Lichtleiter aufnehmenden Aufnahmeprofilkörpers eines Aufnahmesystems gemäß einer Ausführungsform der Erfindung,
- Fig. 2C: eine Draufsicht auf eine Oberseite eines Aufnahmeprofilkörpers eines Aufnahmesystems gemäß einer Ausführungsform der Erfindung,
- Fig. 2D: eine Profilschnittdarstellung eines Aufnahmeprofilkörpers eines Aufnahmesystems gemäß einer Ausführungsform der Erfindung,
- Fig. 3A: eine Profilschnittdarstellung eines Aufnahmesystems gemäß einer Ausführungsform der Erfindung auf Höhe einer quer verlaufenden Profilvertiefung des Aufnahmeprofilkörpers,
- Fig. 3B: eine Profilschnittdarstellung eines Aufnahmesystems gemäß einer Ausführungsform der Erfindung auf Höhe quer verlaufender Halteelemente des Aufnahmeprofilkörpers, und
- Fig. 3C: eine Schnittansicht eines Aufnahmesystems gemäß einer Ausführungsform der Erfindung auf Höhe quer verlaufender Halteelemente in Blickrichtung der Profillängsrichtung des Aufnahmeprofilkörpers.

In den Figuren sind einander entsprechende Bereiche, Bauteile sowie Bauteilgruppen mit denselben Bezugsziffern gekennzeichnet.

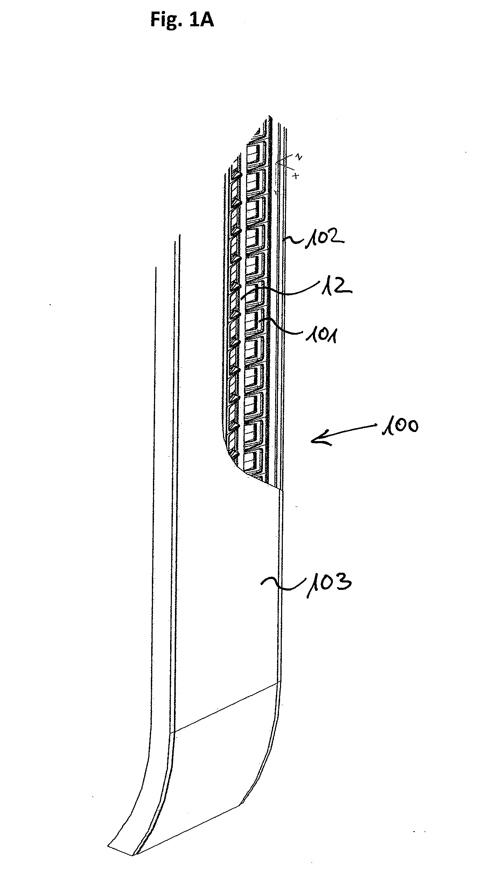

Fig. 1A zeigt eine perspektivische Teilansicht eines Endbereichs eines Aufnahmesystems 100 für einen Lichtleiter 12 mit einem Abdeckungselement 103 gemäß einer bevorzugten Ausführung der Erfindung. Im Endbereich des Aufnahmesystems 100, das beispielhaft als Beleuchtungsschiene einer Beleuchtungseinrichtung ausgestaltet ist, sind innen verlaufende Profile der Schiene des Aufnahmesystems 100 beispielhaft mittels eines über die gesamte Breite der Profile abdeckenden Abdeckungselements 103 überdeckt, welches jedoch zu mittleren Bereichen der Schiene des Aufnahmesystems 100 hin eine Öffnung bildet, durch die der Lichtleiter 12 und ein den Lichtleiter 12 aufnehmendes Aufnahmeprofil (Aufnahmeprofilkörper) 101 sichtbar werden.

Der Aufnahmeprofilkörper 101 nimmt hierbei den beispielhaft in alle Richtung Licht abstrahlenden Lichtleiter 12 in Längsrichtung des Aufnahmeprofils 101 bzw. in Längsrichtung der das System 100 umfassende Beleuchtungsschiene auf, und weist zudem bevorzugt eine diffus reflektierende Oberflächenschicht auf, die seitlich und rückseitig des Lichtleiters 12 abgestrahltes Licht diffus reflektiert.

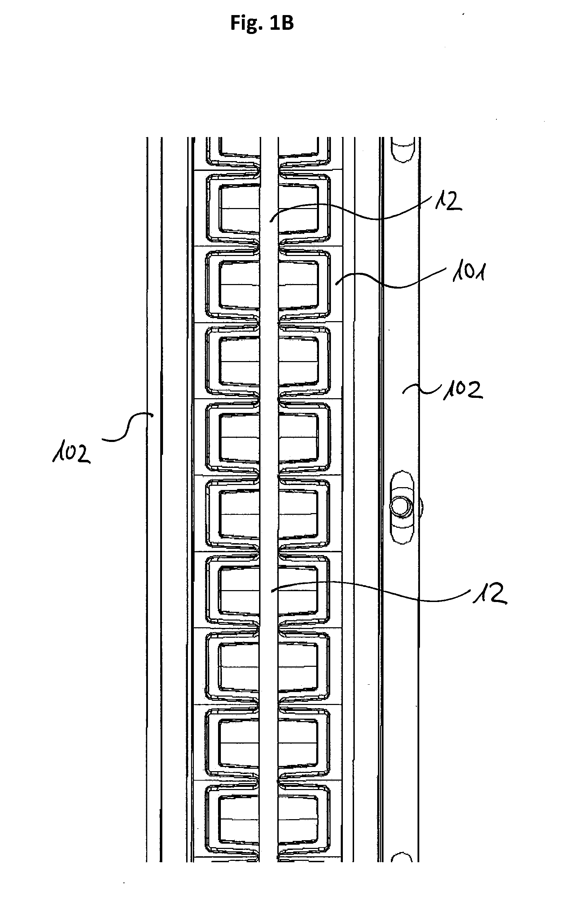

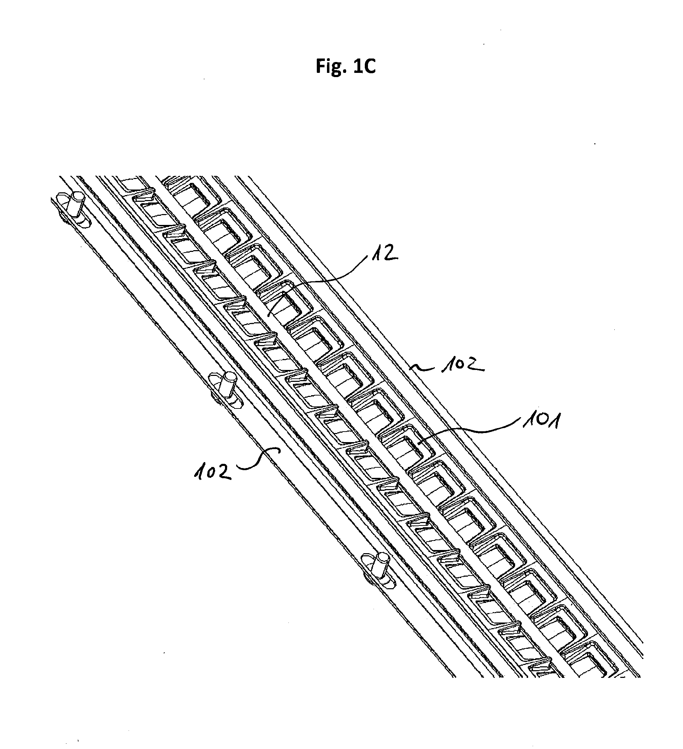

Fig. 1B zeigt beispielhaft eine Draufsicht auf einen mittleren Teilbereich des Aufnahmesystems 100 für den Lichtleiter 12 ohne das Abdeckungselement 103, wobei erkennbar wird, dass der den Lichtleiter 12 aufnehmende Aufnahmeprofilkörper 101 in einen darunter angeordneten Halterungsprofilkörper 102 eingesetzt und fixiert ist. Fig. 1C zeigt beispielhaft eine perspektivische Teilansicht des mittleren Teilbereichs des Aufnahmesystems 100 das ohne Abdeckungselement 103.

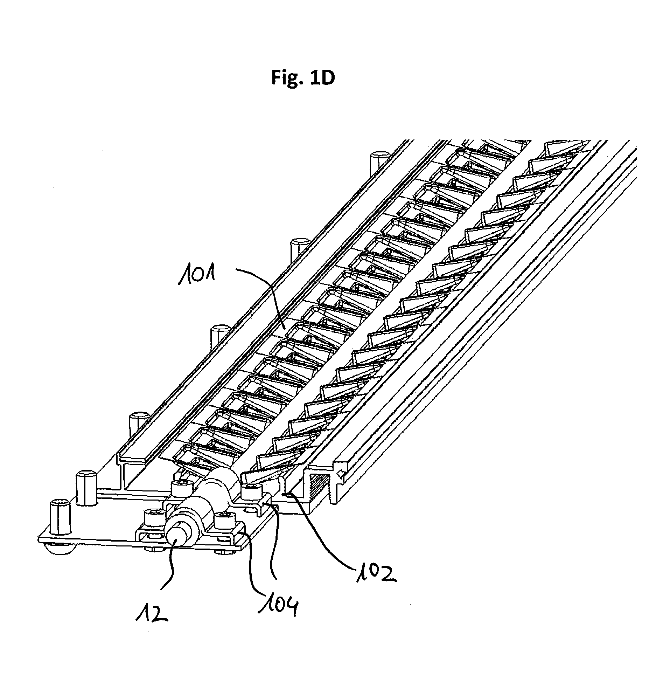

Fig. 1D zeigt beispielhaft eine perspektivische Teilansicht eines Endbereichs des Aufnahmesystems 100 ohne das Abdeckungselement 103. Der Lichtleiter 12 ist endseitig mittels zweier fest verschraubter Befestigungselemente 104, die den Lichtleiter 12 umschließen, fest fixiert. Dies verhindert ein Verrutschen des Lichtleiters 12 in Längsrichtung und ermöglicht an dieser Position eine Beleuchtungseinrichtung (nicht dargestellt), die dazu eingerichtet ist, aktiv Licht in den Lichtleiter 12 einzustrahlen, welches dieser entlang der Profile 101 und 102 an seiner Oberfläche abstrahlt. Entlang der Längsrichtung der Profile 101 und 102 ist der Lichtleiter lediglich seitlich von beidseitig angeordneten Halteelementen des Aufnahmeprofilkörpers 101 geklemmt (weiter unten in Detail beschrieben). Weitere die Lichtabstrahlung des Lichtleiters 12 negativ beeinflussende Befestigungselemente z.B. analog zu den Befestigungselementen 104 sind entlang der Profile 101 und 102 nicht erforderlich, wodurch eine hervorragend gelichmäßige Abstrahlung von Licht durch den Lichtleiter 12 erfolgen kann.

Zudem kann der Lichtleiter 12 auf einfache Weise befestigt werden, da das Aufnahmeprofil 101 derart ausgestaltet ist, dass es den in einem nicht verbogenen Zustand des Profils locker aufgenommenen Lichtleiter 12 erst klemmt, wenn es aufgrund des Einsetzen bzw. Einrastens in das darunter liegende Halterungsprofil in einem mittleren, in Längsrichtung verlaufenden Teilbereich elastisch gebogen wird und den Lichtleiter 12 im gebogenen Zustand zwischen den beidseitig angeordneten Halteelementen klemmt.

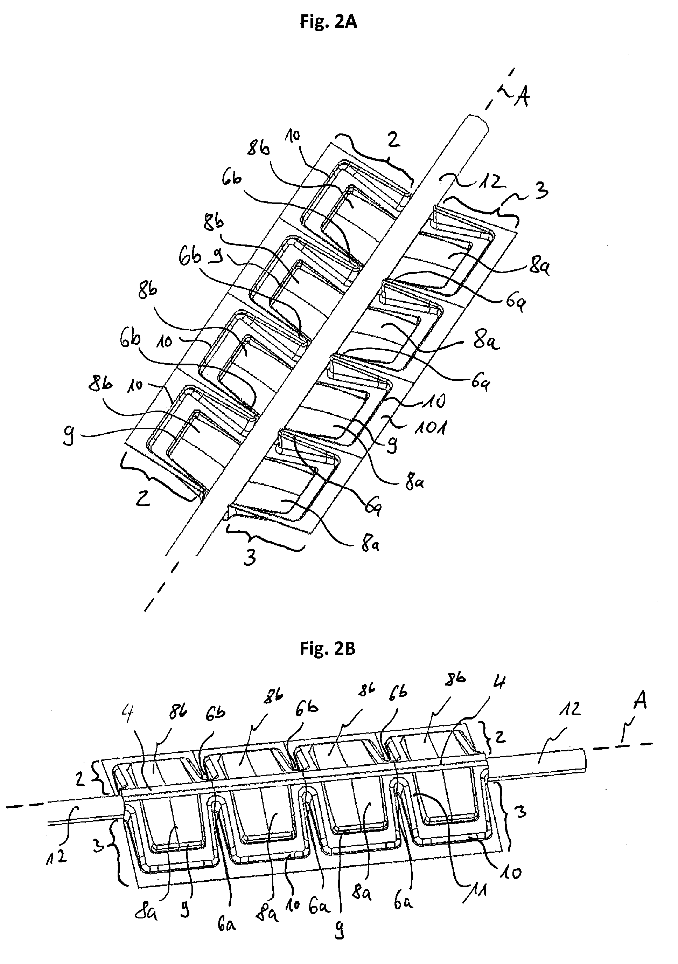

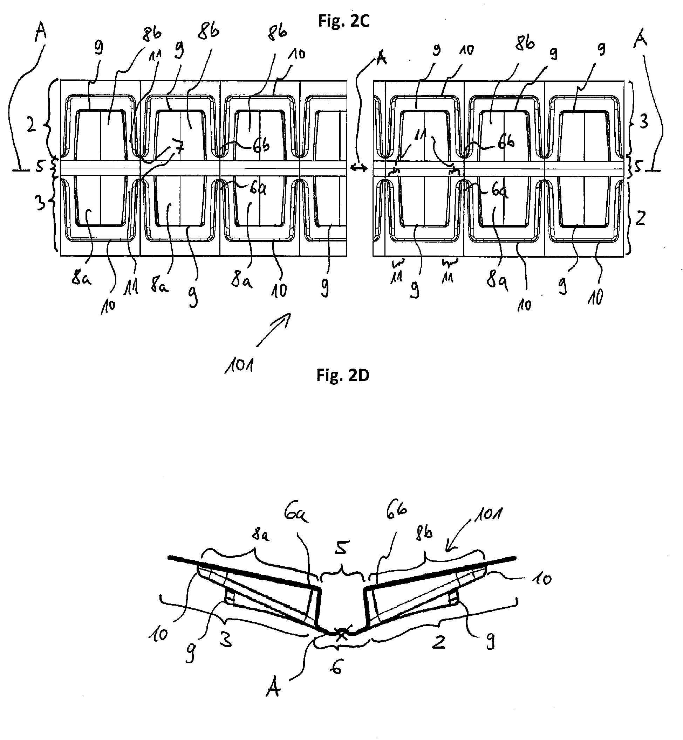

Fig. 2A zeigt beispielhaft eine perspektivische Teilansicht auf eine Oberseite eines einen Lichtleiter 12 aufnehmenden Aufnahmeprofilkörpers 101 des Aufnahmesystems 100 gemäß einer Ausführungsform der Erfindung. Fig. 2B zeigt beispielhaft eine perspektivische Teilansicht auf eine Unterseite des den Lichtleiter 12 aufnehmenden Aufnahmeprofilkörpers 101, Fig. 2C zeigt beispielhaft eine Draufsicht auf eine Oberseite des Aufnahmeprofilkörpers 101 und Fig. 2D zeigt beispielhaft eine Profilschnittdarstellung des Aufnahmeprofilkörpers 101 (allerdings bereits in einem leicht gebogenen Zustand, in dem eine Oberseite der weiter unten beschriebene Abschnitte 2 und 3 nicht mehr wie in einer nicht gebogenen Grundstellung planar im Wesentlichen in einer Ebene liegen, sondern bereits um eine Achse A zueinander verkippt sind, bzw. zueinander verschwenkt/zueinander gefaltet).

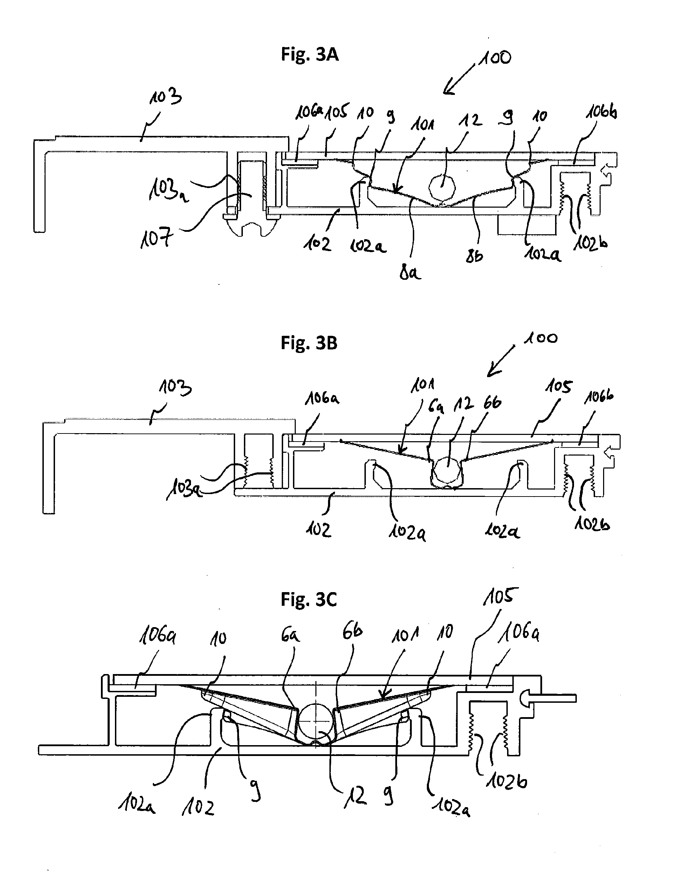

Der Aufnahmeprofilkörper 101 weist beispielhaft einen ersten steifen Abschnitt 2 und einen zweiten steifen Abschnitt 3 auf. Der erste steife Abschnitt 2 und der zweite steife Abschnitt 3 sind entlang einer Achse A relativ zueinander verkippbar bzw. verschwenkbar, insbesondere indem ein mittlerer Biegebereich 6 elastisch verbogen wird. Der Aufnahmeprofilkörper 101 weist weiterhin beispielhaft eine Vertiefungsstruktur auf, die eine entlang der Achse A verlaufende erste Vertiefung 5 zur Aufnahme des Lichtleiters 12 aufweist. Entlang der Achse A sind quer verlaufende stegförmige Halteelemente 6an und 6b vorgesehen, die an die erste Vertiefung 5 angrenzen. Die Halteelemente 6a und 6b sind derart angeordnet, dass sich bei Verbiegen des Aufnahmeprofilkörpers 101 entlang der Achse A die der ersten Vertiefung 5 zugewandten Enden sich gegenüberliegender der Halteelemente 6a und 6b auf den Lichtleiter 12 zubewegen und dabei den Lichtleiter 12 in der ersten Vertiefung 5 einklemmen (siehe auch Figs. 3B und 3C).

Der Aufnahmeprofilkörper 101 ist beispielhaft als flächenförmige, einstückige Einheit ausgestaltet, beispielsweise aus Kunststoff. Der Aufnahmeprofilkörper 101 kann so ausgestaltet sein, dass dieser überall im Wesentlichen die gleiche Dicke aufweist, was beispielsweise dadurch erreicht werden kann, indem der Aufnahmeprofilkörper 101 aus einer Platte gleichförmiger Dicke mittels eines Formprozesses hergestellt wird.

Die Vertiefungsstruktur weist zweite Vertiefungen 8a und 8b auf, die seitlich der ersten Vertiefung 5 entlang der Achse A vorgesehen sind und in die erste Vertiefung 5 münden. Zwei in Längsrichtung benachbarte zweite Vertiefungen 8a des steifen Abschnitts 3 sind jeweils mittels eines der stegförmigen Halteelemente 6a des steifen Abschnitts 3 voneinander getrennt und zwei in Längsrichtung benachbarte zweite Vertiefungen 8b des steifen Abschnitts 2 sind jeweils mittels eines der stegförmigen Halteelemente 6b des steifen Abschnitts 2 voneinander getrennt.

Zudem sind die zweiten Vertiefungen 8a und 8b zu Vertiefungs-Paaren gruppiert, wobei die zweiten Vertiefungen 8a und 8b eines Vertiefungs-Paars (eine zweite Vertiefung 8a und eine zweite Vertiefung 8b) bezüglich der Achse A einander gegenüberliegen. In gleicher Weise sind die Halteelemente 6a und 6b zu Halteelement-Paaren gruppiert, wobei die Halteelemente 6a und 6b eines Halteelement-Paars (ein Halteelement 6a und ein Halteelement 6b) bezüglich der Achse A einander gegenüberliegen. Alternativ könnten jedoch die zweiten Vertiefungen 8 eines VertiefungsPaars sowie die Halteelemente eines Halteelemente-Paars bezüglich der Achse A in Achsrichtung gegeneinander versetzt sein.

Fig. 2B zeigt eine Unterseite des in Fig. 2A gezeigten Aufnahmeprofilkörpers 1. Fig. 2B ist zu entnehmen, dass die zweiten Vertiefungen 8a und 8b ein stufenförmiges Bodenprofil aufweisen: So weist jede der zweiten Vertiefungen 8a und 8b eine erste Stufe 9 sowie eine zweite Stufe 10 auf. Die Tiefe der zweiten Vertiefungen 8a und 8b ist in einem Bereich zwischen der Achse A und der ersten Stufe 9 maximal und ist zwischen der ersten Stufe 9 und der zweiten Stufe 10 reduziert. In einem Bereich 11 der zweiten Vertiefungen 8a und 8b, der unmittelbar an ein Halteelement 6a bzw. 6b angrenzt, nimmt die Höhe der ersten Stufe 10 in Richtung der Achse A kontinuierlich zu, und die Höhe der ersten Stufe 9 kontinuierlich ab. In dieser Ausführungsform entspricht die Tiefe der Vertiefungsstruktur im Bereich der ersten Vertiefung 5 der Vertiefung der zweiten Vertiefungen 8a und 8b in einem Bereich, in welchem die zweiten Vertiefungen 8a und 8b in die erste Vertiefung 5 münden.

Das Verbiegen des ersten steifen Abschnitts 2 gegenüber dem zweiten steigen Abschnitt 3 erfolgt dadurch, dass der Aufnahmeprofilkörper 101 im Bereich der ersten Vertiefung 5 entlang der Achse A verbogen wird. Ist der Aufnahmeprofilkörper 101 insgesamt aus einem zumindest teilweise elastisch verbiegbaren Material hergestellt, so wird bei Verbiegen des Aufnahmeprofilkörpers 101 entlang der Achse A nicht nur im Bereich der ersten Vertiefung 5 verbogen, sondern auch im Bereich des ersten Abschnitts 2 und des zweiten Abschnitts 3. Aufgrund der senkrecht zur Achse A verlaufenden stegförmigen Halteelemente 6a und 6b und auch zum Teil aufgrund der Vertiefungsstruktur der Vertiefungen 8a und 8b ist jedoch gewährleistet, dass sich der Aufnahmeprofilkörper 1 zum allergrößten Teil im Bereich der ersten Vertiefung verbiegt, und nicht beziehungsweise nur minimal innerhalb des ersten steifen Abschnitts 2 oder innerhalb des zweiten steifen Abschnitts 3. Somit wird die Steifigkeit des Profils 101 in den Bereichen der Abschnitte 2 und 3 aufgrund der Vertiefungsstruktur und den senkrecht verlaufenden Halteelementen (die relativ zu den Böden der Vertiefungsstruktur Erhebungen ausformen) vorteilhaft gewährleistet.

Dieser Effekt kann je nach Bedarf abgeschwächt werden, indem die Längsausrichtung der stegförmigen Elemente 6 so gewählt wird, dass diese nicht senkrecht zur Achse A verläuft, sondern die Achse A in einem Winkel ungleich 90° schneidet. So könnte beispielsweise alternative ein fischgrätenähnliches Ausrichtungsmuster der Längsrichtungen der stegförmigen Halteelemente 6a und 6b zum Einsatz kommen.

Die dem Lichtleiter 12 zugewandten Enden der stegförmigen Halteelemente 6a und 6b könne in weiteren Ausführungen der Erfindung kreissegmentförmig ausgestaltet sein. Wenn im gebogenen Zustand des Profils 101 sich die Enden der stegförmigen Halteelemente 6a und 6b auf den Lichtleiter 12 zubewegt haben, kann dieser zumindest teilweise von den kreissegmentförmigen Enden formschlüssig umklammert werden. Dabei können die Enden einen unteren Teil eines Bereichs des Lichtleiters 12 umklammern, der oberhalb einer horizontalen Schnittebene durch den Lichtleiter 12 liegt, der die Längsachse des Lichtleiters beinhaltet. Damit kann noch weiter sichergestellt werden, dass nach Verklemmen des Lichtleiters 12 dieser sich nicht mehr aus dem Aufnahmeprofilkörper 101 lösen kann. Andererseits kann dennoch ein oberer Bereich des Lichtleiters 12 maximal freigelegt sein, sodass sich das Licht in diesem Bereich gut nach oben ausbreiten kann.

Fig. 3A zeigt beispielhaft eine Profilschnittdarstellung des Aufnahmesystems 100 auf Höhe einer quer verlaufenden Profilvertiefung eines Vertiefungspaars 8a und 8b des Aufnahmeprofilkörpers 101, und Fig. 3B zeigt beispielhaft eine Profilschnittdarstellung des Aufnahmesystems 100 auf Höhe quer verlaufender Halteelemente 6a und 6b eines Halteelementpaars des Aufnahmeprofilkörpers 101. Fig. 3C zeigt beispielhaft eine Schnittansicht des Aufnahmesystems 100 auf Höhe quer verlaufender Halteelemente 6a und 6b des Aufnahmeprofilkörpers 101 in Blickrichtung der Profillängsrichtung des Aufnahmeprofilkörpers 101, derart, dass in Blickrichtung liegende Innenwände der als Erhebungen des Profils (in Bezug auf die Vertiefungstruktur) gebildeten Halteelemente 6a und 6b auf gegenüberliegenden Seiten des aufgenommenen Lichtleiters 12 im Hintergrund sichtbar sind.

Die Oberkanten der beispielhaft in Profilquerrichtung stegförmig verlaufenden Halteelemente 6a und 6b sind jeweils eben ausgebildet und zueinander geneigt angeordnet. Dies liegt dem Umstand zu Grunde, dass die die Halteelemente 6a und 6b aufweisenden steifen Abschnitte 2 und 3 zueinander um die Achse A verkippt bzw. verschwenkt sind, und der Profilkörper 101 in den Figs. 3A bis 3C im gebogenen Zustand gezeigt ist, in dem der Profilkörper 101 in den darunter liegenden Halterungsprofilkörper 102 eingesetzt und mit diesem in Eingriff gebracht ist.

Der Profilkörper 101 ist bevorzugt derart ausgestaltet, dass die Oberkanten der Halteelemente 6a und 6b in einem nicht gebogenen Zustand (d.h. Grundzustand ohne äußeren Kräfteeinfluß) des Aufnahmeprofils 101 parallel zueinander ausgerichtet sind, bzw. die Oberkanten der Halteelemente 6a und 6b alle in einer Ebene liegen und die Vertiefungsstruktur der ersten Vertiefung 5 (Aufnahmevertiefung für den Lichtleiter) und der in diese Vertiefung 5 einmündenden seitlichen zweiten Vertiefungen 8a und 8b eine Canyon-artige Vertiefungsstruktur in der Ebene der Oberkanten der Halteelemente 6a und 6b des ungebogenen Aufnahmeprofils 101 bilden.

In Fig. 3A ist beispielhaft gezeigt, dass die Bodenprofile der auf beiden Seiten des Lichtleiters 12 (bzw. des Aufnahmeabschnitts) angeordneten Vertiefungen 8a und 8b jeweilige Stufenprofile gebildet werden, wobei erste Stufen 9 und auf der jeweiligen dem Lichtleiter abgewandten Seite der ersten Stufen 9 angeordnete zweite Stufen 10 ausgebildet sind. Wenn der Aufnahmeprofilkörper 101 in dem Halterungsprofilkörper 102 aufgenommen ist, greifen die ersten Stufen 9 in jeweilige Eingriffsabschnitte 102a und 102a des Halterungsprofils 102 ein. Insbesondere werden untere Außenseiten der Stufen 9 auf beiden Seiten des Lichtleiters 12 und dessen Aufnahmeabschnitts zwischen sich gegenüberliegenden jeweiligen Eingriffsabschnitten 102a und 102a des Halterungsprofils 102 eingeklemmt bzw. verrastet. Die Eingriffsabschnitte 102a und 102a sind hierbei beispielhaft als Profilschienen ausgebildet, die in Profillängsrichtung verlaufen, wobei das Profil des Halterungsprofils 102 mit und zwischen den Eingriffsabschnitten 102a und 102a eine U-Form ausbildet.

Das den Lichtleiter 12 aufnehmende Aufnahmeprofil 101 kann somit in das Halterungsprofil 102 eingesetzt werden, indem zuerst eine der Stufen 9 an einen entsprechenden der beiden Eingriffsabschnitte 102a oder 102a angelegt wird, und danach das Aufnahmeprofil 101 in Richtung des Halterungsprofils 102 eingedrückt wird (z.B. durch leichten Druck auf den Lichtleiter), um dadurch auf dem anderen Eingriffsabschnitt aufliegend gebogen zu werden, bis die Stufe 9 auf der noch nicht im Eingriff befindlichen Seite mit dem entsprechenden Eingriffsabschnitt einrastet und die beiden gegenüberliegenden Stufen 9 zwischen den beiden Eingriffsabschnitten 102a oder 102a verklemmt werden. In diesem Zustand gemäß Figs. 3A bis 3C nimmt das Aufnahmeprofil 101, das sich in diesem Zustand mit den Eingriffsabschnitten 102a oder 102a im Bereich der Stufen 9 und mit dem Boden des Halterungsprofils 102 im Bereich der Achse A in Kontakt befindet, einen vorbestimmten gebogenen Zustand ein, bei dem der Lichtleiter 12 zwischen den durch Verbiegen des Aufnahmeprofils 101 aufeinander zubewegten Halteelementen 6a und 6b verklemmt ist, jedoch nicht eingedrückt wird. Hierbei ist die Höhe der Aufnahmevertiefung und die Höhe der der Aufnahmevertiefung zugewandten Seite der Halteelemente 6a und 6b bevorzugt größer als 1/2 und besonders bevorzugt größer als 2/3 des Durchmessers des Lichtleiters 12.

Weiterhin weist das Aufnahmesystem 100 Dichtelemente 106a und 106b auf, die auf beiden Seiten des aufgenommenen Aufnahmeprofilkörpers 101 auf Abschnitten des Halterungsprofils 102 aufliegen und auf denen ein bevorzugt transparentes plattenförmiges Element 105 aufliegt (welches endseitig über die gesamte Breite befestigt sein kann), das auf Höhe der Schnitte der Figs. 3A bis 3C einseitig zwischen dem Abdeckelement 103 und dem Dichtelement 106a geklemmt ist.

Das Abdeckelement 103 weist Profilschienen auf, die Gewinderillen 103a aufweisen, in die Schrauben 107 zur Befestigung des Abdeckelements 103 an dem Halterungsprofil 102 eingedreht werden können. Somit müssen die Schrauben 107 nicht exakt mit Gewindebohrungen ausgerichtet werden, sondern können einfach in die in Längsrichtung verlaufenden Gewinderillen 103a zwischen Profilschienen des Abdeckelements 103 eingedreht werden, so dass eine exakte Ausrichtung des Abdeckelements 103 und des Halterungsprofils 102 in Längsrichtung bei der Montage des Systems nicht exakt erforderlich ist. Analoge Schienen mit in Längsrichtung verlaufenden Gewinderillen 102b sind ebenfalls beispielhaft an einer Unterseite des Halterungsprofils 102 angeordnet, so dass das Halterungsprofils 102 in analoger Weise durch Eindrehen von Schrauben in die in Längsrichtung verlaufenden Gewinderillen 102a zwischen Profilschienen des Halterungsprofils 102.

Zusammenfassend umfasst ein Aufnahmesystem 100 gemäß einem Ausführungsbeispiel der Erfindung einen Aufnahmeprofilkörper 101 und einen Halterungsprofilkörper 102. Der Aufnahmeprofilkörper 101 ist in der Halterungsprofilkörper 102 verrastbar, indem der Aufnahmeprofilkörper 101 entlang der Achse A verbogen wird und steife Abschnitte 2 und 3 relativ zueinander verschwenkt bzw. verkippt werden. Der Halterungsprofilkörper 102 ist so ausgestaltet, dass die Verrastung erfolgt, nachdem die Halteelemente 6a und 6b den Lichtleiter 12 in der mittleren in Längsrichtung verlaufenden Vertiefung 5 eingeklemmt haben.

Der Halterungsprofilkörper 102 ist in einer Ausführungsform beispielhaft als U-förmiges Element ausgestaltet, wobei die Enden 102a des U-förmigen Elements mit der Unterseite des Aufnahmeprofilkörpers 101, insbesondere mit Stufen 9 eines Stufenprofils der Unterseite des Aufnahmeprofilkörpers 101, verrasten, wenn der Aufnahmeprofilkörper 101 in das U-förmige Element hineingedrückt und damit entlang der Achse A verbogen wird. In dieser beispielhaften Ausführungsform verrasten die Enden 102a des U-förmigen Elements mit den stufenförmigen Bodenprofilen (insbesondere mit den Stufen 9) der Vertiefungen 8a und 8b, wenn der Aufnahmeprofilkörper 101 in das U-förmige Element des Halterungsprofils 102 hineingedrückt und damit entlang der Achse A verbogen wird. Genauer gesagt verrasten in dieser beispielhaften Ausführungsform die Stufen 9 des stufenförmigen Profils mit den Enden 102a des U-förmigen Elements. Die Enden der steifen Abschnitte 2 und 3 (inklusive der zweiten Stufen 10) erstrecken sich beispielhaft jeweils lateral über die Enden 102a des U-förmigen Elements hinaus.

Um eine optimale Verrastung oder Verklemmung des Aufnahmeprofilkörpers 101 mit dem Halterungsprofilkörper 102 zu gewährleisten, können die Stufen 9 höher ausfallen, verglichen zu den zweiten Stufen 10. Des Weiteren können die zweiten Vertiefungen 8 in einem Bereich zwischen den ersten Stufen 9 und der Achse A gewölbt ausfallen.

Um ein einfaches Befestigen der Halterungsprofilkörper an einem Körper (z.B. an einer Seitenwand einer Werkzeugmaschine) zu ermöglichen, kann das Aufnahmesystem 100 mit einer Befestigungseinrichtung versehen werden. Die Befestigungseinrichtung fungiert dann als "Bindeglied", d.h. der Halterungsprofilkörper 102 ist mittels der Befestigungseinrichtung an dem Körper befestigbar (z.B. über die vorstehend beschriebenen Gewinderillen 102b).

Eine Befestigungseinrichtung (ggf. auch als eigenständige bzw. unabhängige Erfindung) weist dann vorteilhafterweise zwei parallel zueinander verlaufende Schienen auf, wobei jede von einander zugewandten (gegenüberliegenden) Seiten der Schienen zumindest teilweise mit einer gerillten Oberfläche (z.B. 103a oder 102a) versehen ist. Zwischen den Schienen ist ein Zwischenraum vorgesehen.

Zum Beispiel können ein Profilkörper und die Befestigungseinrichtung so gegeneinander ausrichtbar, dass der Profilkörper einander gegenüberliegende Enden der Gewinderillen aufweisenden Schienen sowie einen Zwischenraum zwischen den beiden Enden bedeckt. Indem der Teil des Profilkörpers, der die einander gegenüberliegenden Enden der Schienen sowie den Zwischenraum zwischen den beiden Enden bedeckt, mit einer Schraube durchbohrt wird, derart, dass das Gewinde der Schraube (z.B. Schraube 107) zwischen den gerillten Oberflächen (z.B. 103a) zu liegen kommt und in die Rillen der gerillten Oberflächen eingreift, kann der Profilkörper an der Befestigungseinrichtung befestigt werden, da auf diese Weise der Profilkörper auf die beiden Enden der Schienen gedrückt wird. Die Befestigungseinrichtung (ggf. auch ein Profilkörper) kann ihrerseits mit einem weiteren Körper (z.B. einer Seitenwand einer Werkzeugmaschine) befestigt werden. Ein Vorteil dieser Ausführungsform ist, dass die Position der Schraube bzw. die Positionen mehrerer Schrauben bezüglich einer Längsrichtung der Schienen frei wählbar ist/sind (zumindest soweit sich die gerillten Oberflächen entlang der Schienen erstrecken), was einen Prozess der Befestigung der Halterungsprofilkörper an der Befestigungseinrichtung erleichtert.

## Patentansprüche

1. Ein Aufnahmesystem für einen Lichtleiter (12), umfassend:
- einen ersten Profilkörper (101), der dazu ausgebildet ist, den Lichtleiter (12) entlang einer Längsrichtung des ersten Profilkörpers (101) aufzunehmen; und
- einen zweiten Profilkörper (102), der dazu ausgebildet ist, den ersten Profilkörper (101) entlang der Längsrichtung des ersten Profilkörpers (101) aufzunehmen;
wobei der erste Profilkörper (101) aufweist:
- einen sich entlang einer Achse (A) erstreckenden Biegeabschnitt (4), wobei die Achse (A) in der Längsrichtung des ersten Profilkörpers (101) verläuft,
- zwei steife Abschnitte (2, 3), die auf gegenüberliegenden Seiten des Biegeabschnitts (4) angeordnet sind, wobei die steifen Abschnitte (2, 3) mittels elastischem Verbiegen des Biegeabschnitts (4) relativ zueinander um die Achse (A) verschwenkbar sind, und
- Halteelemente (6a, 6b), die entlang der Achse (A) auf den steifen Abschnitten (2, 3) angeordnet sind,
wobei ein sich in der Richtung der Achse (A) erstreckender erster Aufnahmeabschnitt (5) zwischen den Halteelementen (6a, 6b) der steifen Abschnitte (2, 3) zum Aufnehmen des Lichtleiters (12) ausgebildet ist;
wobei der zweite Profilkörper (102) einen zweiten Aufnahmeabschnitt zum Aufnehmen des ersten Profilkörpers (101) aufweist und dazu ausgebildet ist, mit dem ersten Profilkörper (101) in Eingriff gebracht zu werden, wobei der erste Profilkörper (101) dazu ausgebildet ist, in einem gebogenen Zustand mit dem zweiten Profilkörper (102) in Eingriff gebracht zu werden; und
wobei die Halteelemente (6a, 6b) derart angeordnet sind, dass der in dem ersten Aufnahmeabschnitt (5) aufgenommene Lichtleiter (12) zwischen den Halteelementen (6a, 6b) der steifen Abschnitte (2, 3) eingeklemmt ist, wenn der erste Profilkörper (101) in dem gebogenen Zustand mit dem zweiten Profilkörper (102) in Eingriff gebracht ist.

2. Aufnahmesystem nach Anspruch 1, **dadurch gekennzeichnet, dass**
die Halteelemente (6a, 6b) eine erste Gruppe von Halteelementen (6a), die entlang der Achse (A) auf einer der steifen Abschnitte (2, 3) angeordnet sind, und eine zweite Gruppe von Halteelementen (6b), die entlang der Achse (A) auf dem anderen der steifen Abschnitte (2, 3) angeordnet sind, umfassen,
wobei jedes der Halteelemente (6a) der ersten Gruppe einem entsprechenden, auf der gegenüberliegenden Seite der Achse (A) angeordneten Halteelement (6b) der zweiten Gruppe zugewandt ist.

3. Aufnahmesystem nach Anspruch 1 oder 2, **dadurch gekennzeichnet, dass**
die Halteelemente (6a, 6b) derart geformt sind, dass sie sich in einer Richtung quer, insbesondere senkrecht, zur Richtung der Achse (A) erstrecken, zum Erhöhen eine Steifigkeit der steifen Abschnitte (2, 3), derart, dass das elastische Verbiegen im Wesentlichen nur im Bereich des Biegeabschnitts (4) auftritt.

4. Aufnahmesystem nach einem der vorstehenden Ansprüche, **dadurch gekennzeichnet, dass**
der erste Profilkörper (101) eine Vertiefungsstruktur aufweist, die einen sich entlang der Achse (A) erstreckenden ersten Vertiefungsabschnitt aufweist, und der erste Vertiefungsabschnitt den ersten Aufnahmeabschnitt (5) ausbildet,
wobei die Halteelemente (6a, 6b) Erhebungen ausformen, die seitlich entlang des ersten Vertiefungsabschnitts (5) angeordnet sind.

5. Aufnahmesystem nach Anspruch 4, **dadurch gekennzeichnet, dass**
die Vertiefungsstruktur weiterhin zweite Vertiefungsabschnitte (8a, 8b) aufweist, die seitlich entlang des ersten Vertiefungsabschnitts (5) angeordnet sind, wobei die zweiten Vertiefungsabschnitte (8a, 8b) in den ersten Vertiefungsabschnitt (5) münden.

6. Aufnahmesystem nach Anspruch 5, **dadurch gekennzeichnet, dass**
die zweiten Vertiefungsabschnitte (8a, 8b) eine erste Gruppe von zweiten Vertiefungsabschnitten (8a), die entlang der Achse (A) auf einer der steifen Abschnitte (2, 3) angeordnet sind, und eine zweite Gruppe von zweiten Vertiefungsabschnitten (8a), die entlang der Achse (A) auf dem anderen der steifen Abschnitte (2, 3) angeordnet sind, umfassen,
wobei jede der zweiten Vertiefungsabschnitte (8a) der ersten Gruppe einem auf der gegenüberliegenden Seite der Achse (A) angeordneten zweiten Vertiefungsabschnitt (8b) der zweiten Gruppe gegenüberliegend angeordnet ist.

7. Aufnahmesystem nach Anspruch 5 oder 6, **dadurch gekennzeichnet, dass**
jedes Halteelement (6a; 6b) zwei in Richtung der Achse (A) benachbart angeordnete zweite Vertiefungsabschnitte (8a; 8b) voneinander trennt.

8. Aufnahmesystem nach einem der Ansprüche 5 bis 7, **dadurch gekennzeichnet, dass**
die zweiten Vertiefungsabschnitte (8a, 8b) in einem der Achse (A) abgewandten Bereich jeweils ein stufenförmiges Bodenprofil (9) aufweisen.

9. Aufnahmesystem nach Anspruch 8, **dadurch gekennzeichnet, dass**
die stufenförmigen Bodenprofile (9) der zweiten Vertiefungsabschnitte (8a, 8b) dazu ausgebildet sind, mit jeweiligen Eingriffsabschnitten (102a, 102a) des zweiten Aufnahmeabschnitts des zweiten Profilkörpers (102) in Eingriff gebracht zu werden.

10. Aufnahmesystem nach einem der vorstehenden Ansprüche, **dadurch gekennzeichnet, dass**
der zweite Aufnahmeabschnitt des zweiten Profilkörpers (102) im Querschnitt im Wesentlichen U-förmig ausgebildet ist, wobei jeweilige Endabschnitte des U-förmig ausgebildeten zweiten Aufnahmeabschnitts Eingriffsabschnitte (102a, 102a) des zweiten Aufnahmeabschnitts des zweiten Profilkörpers (102) ausbilden, wobei der erste Profilkörper (101) dazu ausgebildet ist, mit den Eingriffsabschnitten (102a, 102a) des zweiten Aufnahmeabschnitts des zweiten Profilkörpers (102) zu verrasten.

11. Aufnahmesystem nach Anspruch 10, **dadurch gekennzeichnet, dass**
der erste Profilkörper (101) im mit den Eingriffsabschnitten (102a, 102a) verrasteten Zustand den gebogenen Zustand einnimmt und den Lichtleiter (12) zwischen den Halteelementen (6a, 6b) klemmt.

12. Aufnahmesystem nach einem der vorstehenden Ansprüche, **dadurch gekennzeichnet, dass**
der erste Profilkörper (101) ein Kunststoffprofil aufweist und der zweite Profilkörper (102) ein Metallprofil aufweist.

13. Aufnahmesystem nach einem der vorstehenden Ansprüche, **dadurch gekennzeichnet, dass**
der Lichtleiter (12) dazu geeignet ist, gleichmäßig über seine gesamte Oberfläche Licht abzustrahlen, wobei der erste Profilkörper (101) eine Oberflächenbeschichtung aufweist, die dazu geeignet ist, von dem Lichtleiter (12) abgestrahltes Licht zu reflektieren, insbesondere diffus zu reflektieren.

14. Ein erster Profilkörper (101) zum Einsatz in einem Aufnahmesystem nach einem der vorstehenden Ansprüche, wobei der erste Profilkörper (101) dazu ausgebildet ist, den Lichtleiter (12) entlang einer Längsrichtung des ersten Profilkörpers (101) aufzunehmen,
wobei der erste Profilkörper (101) aufweist:
- einen sich entlang einer Achse (A) erstreckenden Biegeabschnitt (4), wobei die Achse (A) in der Längsrichtung des ersten Profilkörpers (101) verläuft,
- zwei steife Abschnitte (2, 3), die auf gegenüberliegenden Seiten des Biegeabschnitts (4) angeordnet sind, wobei die steifen Abschnitte (2, 3) mittels elastischem Verbiegen des Biegeabschnitts (4) relativ zueinander um die Achse (A) verschwenkbar sind, und
- Halteelemente (6a, 6b), die entlang der Achse (A) auf den steifen Abschnitten (2, 3) angeordnet sind,
wobei ein sich in der Richtung der Achse (A) erstreckender erster Aufnahmeabschnitt (5) zwischen den Halteelementen (6a, 6b) der steifen Abschnitte (2, 3) zum Aufnehmen des Lichtleiters (12) ausgebildet ist, und
wobei die Halteelemente (6a, 6b) derart angeordnet sind, dass der in dem ersten Aufnahmeabschnitt (5) aufgenommene Lichtleiter (12) zwischen den Halteelementen (6a, 6b) der steifen Abschnitte (2, 3) einklemmbar ist, indem der erste Profilkörper (101) mittels elastischem Verbiegen des Biegeabschnitts (4) in den gebogenen Zustand gebracht wird.

15. Ein zweiter Profilkörper (102) zum Einsatz in einem Aufnahmesystem nach einem der Ansprüche 1 bis 13, wobei der zweite Profilkörper (102) dazu ausgebildet ist, den ersten Profilkörper (101) entlang der Längsrichtung des ersten Profilkörpers (101) aufzunehmen, der aufweist:
- einen sich entlang einer Achse (A) erstreckenden Biegeabschnitt (4), wobei die Achse (A) in der Längsrichtung des ersten Profilkörpers (101) verläuft,
- zwei steife Abschnitte (2, 3), die auf gegenüberliegenden Seiten des Biegeabschnitts (4) angeordnet sind, wobei die steifen Abschnitte (2, 3) mittels elastischem Verbiegen des Biegeabschnitts (4) relativ zueinander um die Achse (A) verschwenkbar sind, und
- Halteelemente (6a, 6b), die entlang der Achse (A) auf den steifen Abschnitten (2, 3) angeordnet sind; und
wobei der zweite Profilkörper (102) einen zweiten Aufnahmeabschnitt zum Aufnehmen des ersten Profilkörpers (101) aufweist und dazu ausgebildet ist, mit dem ersten Profilkörper (101) in Eingriff gebracht zu werden, derart, dass der erste Profilkörper (101) in einem gebogenen Zustand mit dem zweiten Profilkörper (102) in Eingriff gebracht wird.
